# FASCICULE DE BREVET EUROPEEN

(11) **EP 2 714 445 B1**
(45) Date de publication et mention de la délivrance du brevet: **11.05.2016**
(21) Numéro de dépôt: 12716041.4
(22) Date de dépôt: 24.04.2012
(51) Int. Cl.: B60J 7/22

(54) **DISPOSITIF COUPE-VENT POUR VÉHICULE AUTOMOBILE**
WINDABWEISER FÜR CABRIOLET
WIND DEFLECTOR FOR CONVERTIBLE

(30) Priorité: 01.06.2011 FR 1154846
(43) Date de publication de la demande: 09.04.2014
(73) Titulaire: Advanced Comfort Systems France SAS - ACS France, 79302 Bressuire Cedex (FR)
(72) Inventeur: WITKOWSKI, Romain, F-49300 Cholet (FR)
(74) Mandataire: Vidon Brevets & Stratégie
(86) Numéro de dépôt international: PCT/EP2012/057439
(87) Numéro de publication internationale: WO 2012/163601

(56) Documents cités:
- EP-A2- 2 030 823
- DE-A1-102004 061 758
- DE-A1-102006 059 918
- DE-U1- 20 122 172

## Description

### 1. Domaine de l'invention

Le domaine de l'invention est celui des véhicules automobiles, et plus précisément des véhicules de type cabriolet, comprenant un pavillon ou une capote amovible.

Plus précisément encore, l'invention concerne les dispositifs « coupe-vent » (souvent également désignés par le terme anglais « windstop ») que l'on peut déployer à l'arrière des sièges de ces véhicules lorsqu'ils sont en position découverte (pavillon ou capote ôté ou replié), pour améliorer les performances aérodynamiques du véhicule et réduire les mouvements d'air pour les passagers.

### 2. Art antérieur

On connaît déjà de nombreux dispositifs coupe-vent, formés par des déflecteurs rigides ou souples, amovibles et/ou repliables.

Ils se composent généralement de deux déflecteurs disposés sensiblement perpendiculairement : un déflecteur horizontal couvrant l'espace situé à l'arrière des sièges avant et, quand le véhicule en est équipé, les sièges arrières, et un déflecteur vertical s'étendant immédiatement à l'arrière des sièges avant, sensiblement dans le prolongement des dossiers de ces sièges.

Plusieurs véhicules cabriolets sont actuellement diffusés avec un tel équipement, qui est généralement amovible et pliable. Il peut s'agir d'une simple toile, éventuellement montée sur un cadre souple. Un dispositif coupe-vent de ce type est présenté dans le document EP-2030823.

Ces équipements ont l'avantage d'être relativement simples, mais ils peuvent être relativement encombrants en position pliée et leur mise en place peut être peu aisée. En particulier, le pliage, le dépliage et le montage sur le véhicule sont généralement complexes et non intuitifs.

Ils sont donc mal adaptés à certains véhicules, pour lesquels il est souhaitable que les équipements soient faciles à monter, d'aspect solide et esthétique, et le cas échéant au moins en partie automatisable.

Dans certains modes de réalisation, l'encombrement en position pliée reste important, et des parties saillantes, correspondant aux moyens de solidarisation avec le véhicule, augmentent l'encombrement, et peuvent être source de détérioration.

Par ailleurs, des difficultés peuvent apparaître pour la mise en place du dispositif sur le véhicule, et son maintien en place lorsque le véhicule est en déplacement. Il est important que les moyens de solidarisation soient mis en oeuvre de façon sûre, conforme aux prescriptions du constructeur. Il est également important que les dispositifs restent en position dépliée correcte, tant qu'ils sont montés sur le véhicule, et donc d'empêcher tout repliage intempestif du dispositif.

### 3. Objectifs de l'invention

La présente a pour objection de pallier ces inconvénients de l'art antérieur.

En particulier, la présente invention a pour objectif de fournir un dispositif coupe-vent pour véhicule automobile de type cabriolet, permettant de façon simple et efficace de déployer et maintenir un élément coupe-vent.

Un autre objectif de l'invention est de fournir un tel dispositif coupe-vent qui soit de conception simple et facile à produire.

Encore un autre objectif de l'invention est de fournir un tel dispositif coupe-vent qui soit peu encombrant dans une position pliée.

### 4. Exposé de l'invention

Ces objectifs, ainsi que d'autres qui apparaîtront plus clairement par la suite sont atteints à l'aide d'un dispositif coupe-vent pliable pour véhicule automobile de type cabriolet, comprenant un déflecteur horizontal, destiné à couvrir l'espace situé à l'arrière des sièges avant du véhicule, et/ou un déflecteur vertical destiné à s'étendre sensiblement à l'arrière des dossiers des sièges avant ou des sièges arrière du véhicule, des articulations permettant le passage d'une position pliée à une position dépliée, et réciproquement, ledit dispositif portant au moins deux premiers éléments de solidarisation destinés à coopérer avec une partie complémentaire dudit véhicule.

Selon l'invention, le dispositif comprend des moyens d'escamotage desdits premiers éléments de solidarisation pilotés par le pliage desdits déflecteurs.

Le dispositif coupe-vent est pliable entre une position d'utilisation et une position de rangement et met en oeuvre des moyens d'escamotage des pions d'assemblage du dispositif coupe-vent sur le véhicule qui sont pilotés par le repliage du ou des déflecteurs du dispositif coupe-vent.

Le dispositif coupe-vent peut ainsi être plié de manière compacte quand il n'est pas utilisé et permet une manipulation aisée par un utilisateur.

Avantageusement, le déflecteur horizontal et/ou le déflecteur vertical comporte chacun au moins un cadre dans lequel peut être tendue au moins une toile formant paroi.

Selon un mode de réalisation avantageux, le dispositif coupe-vent comprend un déflecteur vertical et un déflecteur horizontal, lesdites articulations permettant un pliage en deux temps :
- une première opération de pliage par rapport à un premier axe de pliage, dans laquelle ledit dispositif est plié en deux, ledit déflecteur vertical et ledit déflecteur horizontal s'étendant dans des plans sensiblement parallèles ;
- une deuxième opération de pliage par rapport à au moins un second axe de pliage perpendiculaire audit premier axe, dans laquelle ledit dispositif est plié en quatre.

Cette solution permet de mettre en oeuvre l'invention de façon particulièrement simple, peu coûteuse, et facile d'utilisation.

Préférentiellement, lesdits éléments de solidarisation sont escamotés lors de la deuxième opération de pliage.

Selon un autre mode de réalisation avantageux, le déflecteur horizontal comporte deux cadres mobiles l'un par rapport à l'autre.

Préférentiellement, le déflecteur vertical comprend un cadre en deux parties reliées par deux charnières doubles.

Avantageusement, lesdits premiers éléments de solidarisation comprennent au moins un premier pion s'étendant sensiblement parallèlement audit premier axe, dans la position dépliée.

De préférence, ledit premier pion est entraîné en coulissement parallèlement audit premier axe, dans un logement ménagé dans le déflecteur horizontal, lors de la deuxième opération de pliage, par une pièce solidaire du cadre dudit déflecteur vertical.

De façon avantageuse, ledit pion présente une gorge recevant un élément d'entraînement en coulissement solidaire dudit cadre du déflecteur vertical.

Préférentiellement, le dispositif coupe-vent comprend des seconds moyens de solidarisation escamotables, montés sur ledit déflecteur horizontal à distance desdits premiers moyens de solidarisation.

De façon avantageuse, lesdits seconds moyens de solidarisation sont des seconds pions montés articulés entre une position de travail et une position escamotée.

Dans une mise en oeuvre particulière, lesdits seconds pions coopèrent avec au moins une lame ressort, dans la position de travail et/ou dans la position escamotée.

Avantageusement, le déplacement desdits seconds pions est pilotés par le déplacement desdits premiers pions.

Dans ce cas, au moins un premier pion et au moins un second pion sont reliés par un câble.

Dans une mise en oeuvre particulière, le dispositif coupe-vent comprend des moyens de verrouillage dans ladite position dépliée, et des moyens de libération du verrouillage, permettant de le replier.

### 5. Liste des figures

D'autres caractéristiques et avantages de l'invention apparaîtront plus clairement à la lecture de la description suivante de modes de réalisation de l'invention, donnée à titre illustratif et non-limitatif et accompagnée des dessins, parmi lesquels :
- les figures 1A à 1C représentent un dispositif coupe-vent pliable selon un mode de réalisation possible de l'invention, le dispositif étant respectivement:
   - figure 1A : en position d'utilisation ;
   - figure 1B : en position intermédiaire de recouvrement ;
   - figure 1C : en position de rangement ;
- les figures 2 à 4 illustrent l'escamotage d'un pion d'assemblage au véhicule du dispositif coupe-vent de l'invention ;
- les figures 5 à 7 représentent différentes vues du mécanisme d'escamotage d'un pion d'assemblage au véhicule du dispositif coupe-vent de l'invention ;
- les figures 8 et 9 sont des vues en coupe selon l'axe A-A et B-B respectivement du mécanisme d'escamotage illustré sur la figure 7 ;
- les figures 10A et 10B représentent différentes vues du mécanisme de verrouillage du dispositif coupe-vent selon un premier mode de réalisation ;
- les figures 10C et 10D illustrent une variante de la solution des figures 10A et 10B, respectivement en position verrouillée et en position déverrouillée ;
- les figures 11A à 11C représentent différentes vues du mécanisme de verrouillage du dispositif coupe-vent selon un deuxième mode de réalisation ;
- les figures 12A et 12B représentent différentes vues du mécanisme de verrouillage du dispositif coupe-vent selon un troisième mode de réalisation ;
- les figures 13A et 13B illustrent un exemple d'escamotage d'un pion d'assemblage au véhicule du dispositif coupe-vent de l'invention
- la figure 14 est une vue du mécanisme de verrouillage du dispositif coupe-vent selon un quatrième mode de réalisation.

### 6. Description d'un mode de réalisation de l'invention

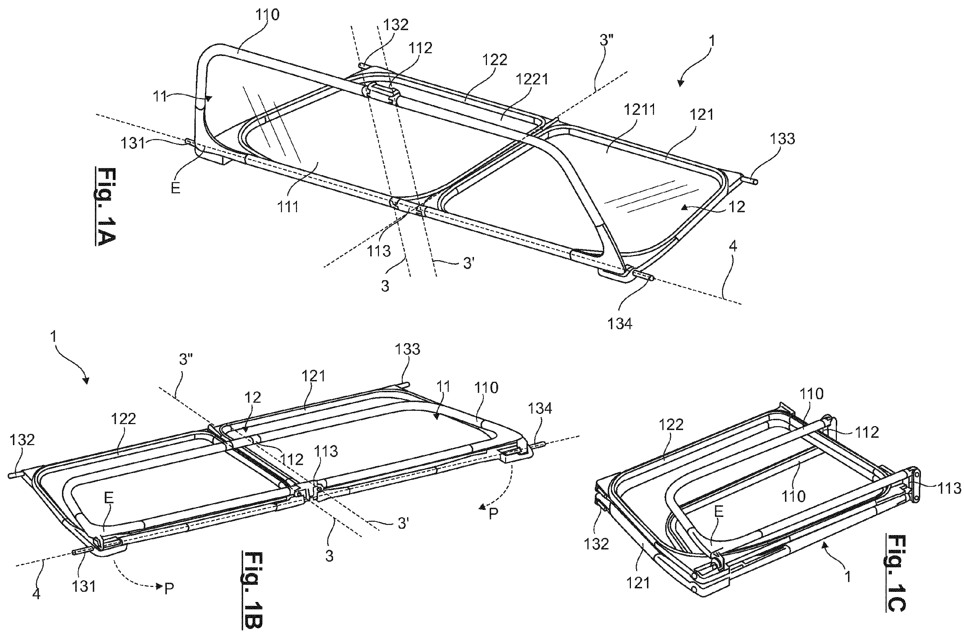

Les **figures 1A à 1C** représentent un dispositif coupe-vent 1 pliable pour les véhicules de type cabriolet, selon un mode de réalisation possible de l'invention. Le dispositif coupe-vent 1 se compose ici de deux déflecteurs 11, 12 articulés l'un par rapport à l'autre autour d'un axe 4.

La **figure 1A** représente le dispositif coupe-vent 1 en position d'utilisation. Dans cette position, les déflecteurs 11, 12 sont disposés sensiblement perpendiculairement l'un à l'autre. Le premier déflecteur 11 (déflecteur vertical) est destiné à s'étendre immédiatement à l'arrière des sièges avant du véhicule, sensiblement dans le prolongement des dossiers des sièges avant. Le deuxième déflecteur 12 (déflecteur horizontal) est destiné à couvrir l'espace situé à l'arrière des sièges avant. Cet espace peut être, dans certains véhicules, occupé par des places arrières. Par simplification, les sièges avant et arrière du véhicule ne sont pas représentés sur les figures.

Le premier déflecteur 11 est constitué par un cadre 110, par exemple en aluminium, dans lequel est tendue une toile 111 formant paroi. De façon avantageuse, le cadre 110 comprend deux charnières 112 et 113 lui permettant d'être plié autour de deux axes 3, 3' parallèles lorsque le dispositif coupe-vent 1 est retiré du véhicule.

Le deuxième déflecteur 12 est composé de deux panneaux qui sont placés, en position d'utilisation, dans le prolongement l'un de l'autre. Chacun de ces panneaux est constitué par un cadre en aluminium, respectivement 121 et 122, dans lequel sont tendues des toiles 1211, 1221 formant paroi. Grâce à des charnières adaptées, chacun de ces cadres 121, 122 est monté pivotant, autour d'un premier axe 4, par rapport à une partie du cadre 110 du premier déflecteur 11. En outre, les cadres 121, 122 peuvent être pliés (ramenés l'un au-dessus de l'autre), grâce à des charnières adaptées, autour d'un second axe 3", perpendiculaire au premier axe 4, lorsque le dispositif coupe-vent 1 est retiré du véhicule.

Ainsi, le dispositif coupe-vent 1 peut être plié en quatre (comme illustré sur la **figure 1C**) quand il est retiré du véhicule, pour faciliter son rangement. On applique ici un pliage classique, et intuitif pour tout utilisateur (similaire au pliage appliqué à une feuille de papier par exemple, successivement selon deux axes perpendiculaires)

Il est à noter que pour passer de la position d'utilisation de la figure 1A à la position de rangement de la figure 1C, et vice versa, il est nécessaire de faire passer le dispositif coupe-vent 1 par la position intermédiaire de recouvrement (**figure 1B**) dans laquelle les deux déflecteurs 11, 12 se situent dans deux plans sensiblement parallèles et couvrent l'espace situé à l'arrière des sièges avant (en d'autres termes, les deux déflecteurs reposent à plat). Pour passer de la position d'utilisation de la figure 1A à la position intermédiaire de recouvrement de la figure 1B, le premier déflecteur 11 est rabattu, par pivotement autour de l'axe 4, sur le deuxième déflecteur 12. Le dispositif coupe-vent 1 est ainsi plié en deux.

Dans certains cas, cette position intermédiaire peut être également une position d'utilisation, c'est-à-dire que le dispositif peut rester installé sur le véhicule, le déflecteur vertical étant replié.

Le passage de la position de intermédiaire de recouvrement (figure 1B) à la position repliée (figure 1C) suppose de plier selon les flèches P le cadre 110 du premier déflecteur 11 autour des axes 3 et 3' par le biais des charnières 112 et 113 et les cadres 121, 122 du deuxième déflecteur 12 autour de l'axe 3". Dans la position repliée, le dispositif coupe-vent 1 est plié en quatre, le cadre 121 et le cadre 122 du deuxième déflecteur 12 étant situés entre les éléments du cadre 110.

On note que le mécanisme de repliage du dispositif coupe-vent 1 met en oeuvre des doubles charnières 112 et 113 classiques, permettant d'éloigner les deux axes de pivotement de quelques centimètres, de façon à placer les deux cadres parallèles l'un à l'autre tout en tenant compte de l'épaisseur du deuxième déflecteur 12 en position repliée. La charnière 113 permet en outre de contrôler le pliage du cadre 110 selon les axes 3, 3' et la rotation du déflecteur 11 par rapport au déflecteur 12 selon l'axe 4.

### Déploiement et escamotage des pions de montage du dispositif coupe-vent

En position d'utilisation (figure 1A) et en position intermédiaire de recouvrement (figure 1B), le dispositif coupe-vent 1 peut être solidarisé au véhicule automobile par l'intermédiaire de plusieurs éléments de solidarisation sous la forme de pions ou d'axes. Dans cet exemple, il s'agit de quatre pions 131, 132, 133 et 134 (également appelés «pions de montage» ou «pions d'assemblage »). Ces pions sont montés aux quatre coins du cadre du deuxième déflecteur 12 et sont destinés à s'engager dans des orifices complémentaires prévus sur le véhicule. Plus précisément, le pion avant 131 et le pion arrière 132 sont montés sur le cadre 122 du deuxième déflecteur 12, le pion avant 134 et le pion arrière 133 étant montés sur le cadre 121 du deuxième déflecteur 12.

Dans la position repliée du dispositif coupe-vent 1 (**figure 1C****),** ces pions 131, 132, 133 et 134 sont escamotés ce qui permet de réduire le volume du dispositif coupe-vent 1 en position repliée, et d'éviter toute détérioration des pions d'une part, et de l'environnement par les pions, d'autre part.

On décrit par la suite la solution d'escamotage automatique des pions mis en oeuvre lors du passage du dispositif coupe-vent 1 de la position intermédiaire de recouvrement (figure 1B) à la position repliée (figure 1C). Cette solution permet également le déploiement automatique des pions lors du déploiement ou passage du dispositif coupe-vent 1 de la position repliée (figure 1C) à la position intermédiaire de recouvrement (figure 1B).

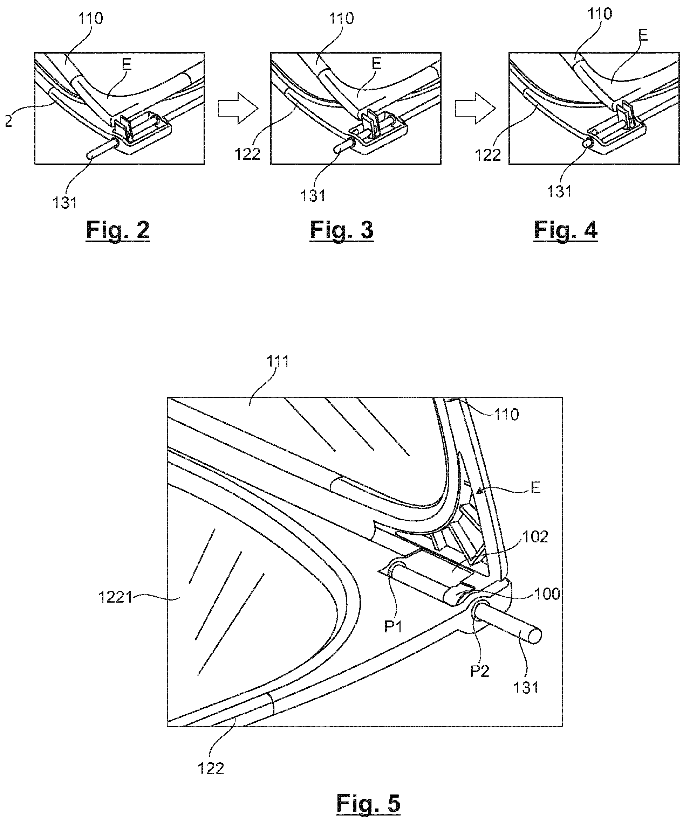

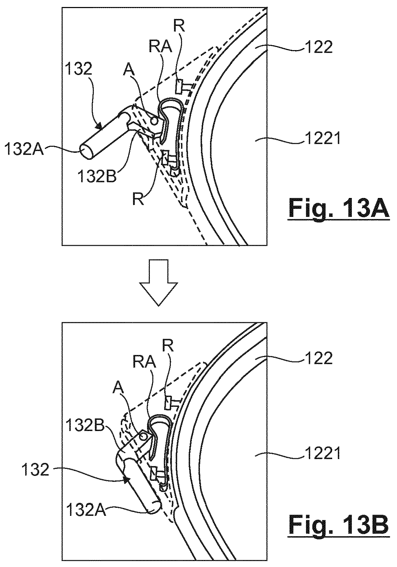

Dans le mode de réalisation décrit en relation avec les figures 2 à 9, seuls les pions avant 131, 134 sont déployés automatiquement. En effet, les pions arrière 132, 133 sont articulés et peuvent être dépliés ou repliés manuellement selon le principe illustré sur les figures 13A et 13B. Sur ces figures 13A et 13B, on a représenté uniquement le pion arrière 132 monté sur le cadre 122 du deuxième déflecteur 12, mais bien évidemment, le principe s'applique de la même façon au pion arrière 133.

Ainsi, le pion arrière 132 est monté pivotant autour d'un axe d'articulation A sur un ressort d'articulation RA qui est fixé, par le biais de deux rivets R, au cadre 122 du déflecteur 12. Le pion arrière 132 comprend deux portions formant sensiblement un « L », la première portion 132B étant située dans un logement du cadre 122 et reliée au ressort d'articulation RA situé dans ce logement également, la deuxième portion 132A étant destinée à s'engager et à être verrouillé dans un orifice complémentaire (non illustré) prévu sur le véhicule. Dans la position dépliée du pion arrière 132 (figure 13A), la deuxième portion 132A est sensiblement parallèle à l'axe de pivotement 4 des déflecteurs 11, 12 (figures 1A et 1B).

Pour replier le pion arrière 132, l'utilisateur saisit la deuxième portion 132 A du pion 132 et la rabat autour de l'axe d'articulation A jusqu'à la position pliée ou escamotée illustrée sur les figures 1C et 13B.

Le mécanisme de déploiement ou escamotage automatique des pions avant 131, 134 est illustré par les **figures 2 à 9** qui, par souci de simplification, illustrent uniquement le pion avant 131.

La **figure 5** est une vue partielle, en perspective, du dispositif coupe-vent 1 lorsque ce dernier est en position d'utilisation (figure 1A), le pion avant 131 étant déployé.

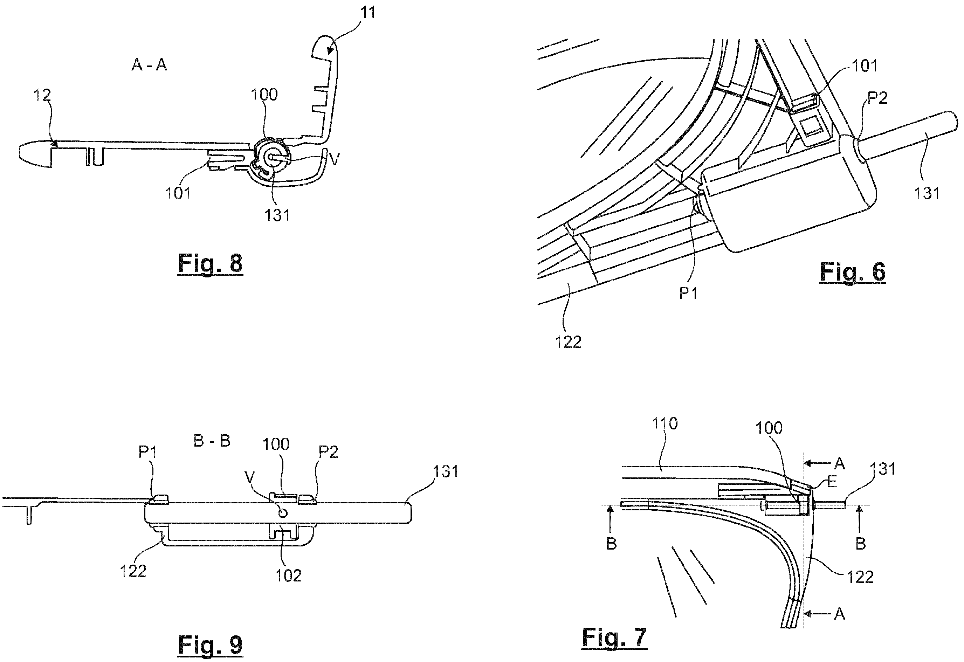

Les **figures 6 et 7** sont des vues partielles, de dessous et de dessus respectivement, du dispositif coupe-vent 1 lorsque ce dernier est en position d'utilisation, le pion avant 131 étant déployé.

Les **figures 8 et 9** sont des vues en coupe selon l'axe A-A et B-B respectivement du mécanisme d'escamotage du pion avant 131 illustré sur la figure 7.

Comme on le voit sur ces figures, le pion 131 est guidé par des paliers P1, P2 dans le cadre 122 du deuxième déflecteur 12 et s'étend selon l'axe 4 (figure 1B). L'embout E du cadre 110 du premier déflecteur 11, qui est monté mobile en rotation autour de l'axe 4 sur le cadre 122 du deuxième déflecteur 12, est solidarisé au pion 131 par le biais d'un ressort 100, ce dernier étant fixé sur le pion 131 par une vis V et enclavé dans un élément de liaison, ou une gorge, 102 du cadre 122.

Comme illustré sur la figure 8, le ressort 100 coopère avec une butée 101 montée sur le bord inférieur du cadre 122 (figure 6).

La **figure 2** illustre le pion avant 131 en position déployée lorsque le dispositif coupe-vent 1 est dans la position de recouvrement de la figure 1B. Lorsque le pliage des déflecteurs 11, 12 selon les axes 3, 3' est amorcé, l'escamotage du pion 131 est également amorcé (**figure 3**) du fait que l'embout E du cadre 110 du déflecteur 11, qui est lié au pion 131, se décale par rapport au cadre 122 du déflecteur 12. Le pliage des déflecteurs 11, 12 se poursuit jusqu'à ce que le dispositif coupe-vent 1 soit plié en quatre (figure 1C), l'embout E se décale et le pion 131 est entièrement escamoté à l'intérieur du cadre 122 (**figure 4**).

On comprend que, lors du dépliage du dispositif coupe-vent 1, le mouvement de l'embout E du cadre 110 entraîne le déploiement du pion 131. Ceci permet de faciliter le montage du dispositif coupe-vent 1 dans le véhicule.

Dans une alternative (non illustrée), le dépliage du dispositif coupe-vent 1 entraîne le déploiement des pions avant 131, 134 et des pions arrière 132, 133 de façon simultanée et automatique. Pour ce faire, un système de transmission, par exemple à l'aide de tiges et/ou de câbles guidés dans les cadres 121, 122 du deuxième déflecteur 12 permet un mouvement synchrone des pions avant 131, 134 et des pions arrière 132, 133. En d'autres termes, le mouvement (déploiement ou escamotage) des pions arrière 132, 133 est lié au mouvement (déploiement ou escamotage) des pions avant 131, 134.

### Verrouillage du dispositif coupe-vent

Afin de sécuriser le dispositif coupe-vent 1 lorsque ce dernier est en position d'utilisation ou de recouvrement, c'est-à-dire lorsque le premier déflecteur 11 est plié (figure 1B) ou déplié (figure 1A), il est prévu un système de blocage ou verrouillage du dispositif coupe-vent 2 au niveau de la charnière des cadres 121, 122 du déflecteur 12 et de la triple charnière 113 du cadre 110 du déflecteur 11.

Ce système de blocage peut être mis en oeuvre seul ou en complément du système de déploiement (ou escamotage) automatique des pions décrit précédemment. Il est toutefois avantageux dans ce dernier cas puisqu'il évite tout escamotage intempestif des pions.

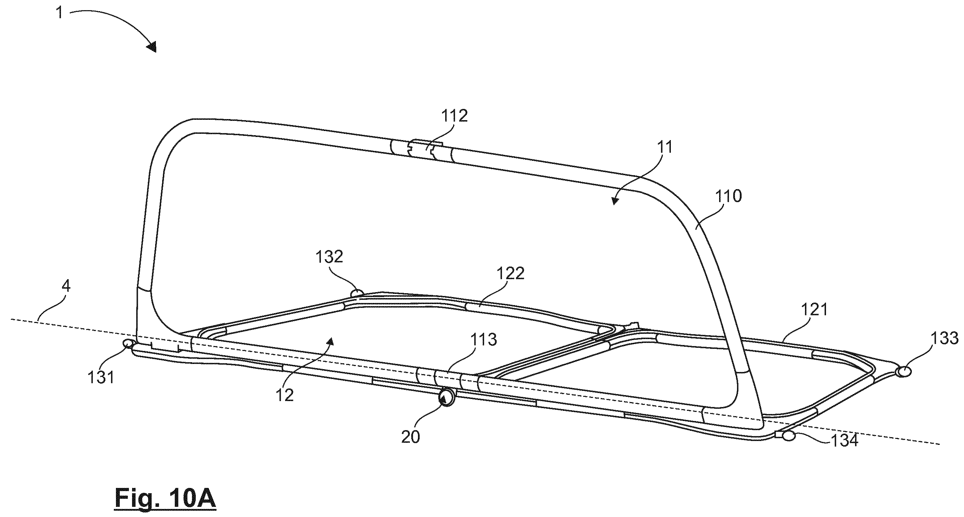

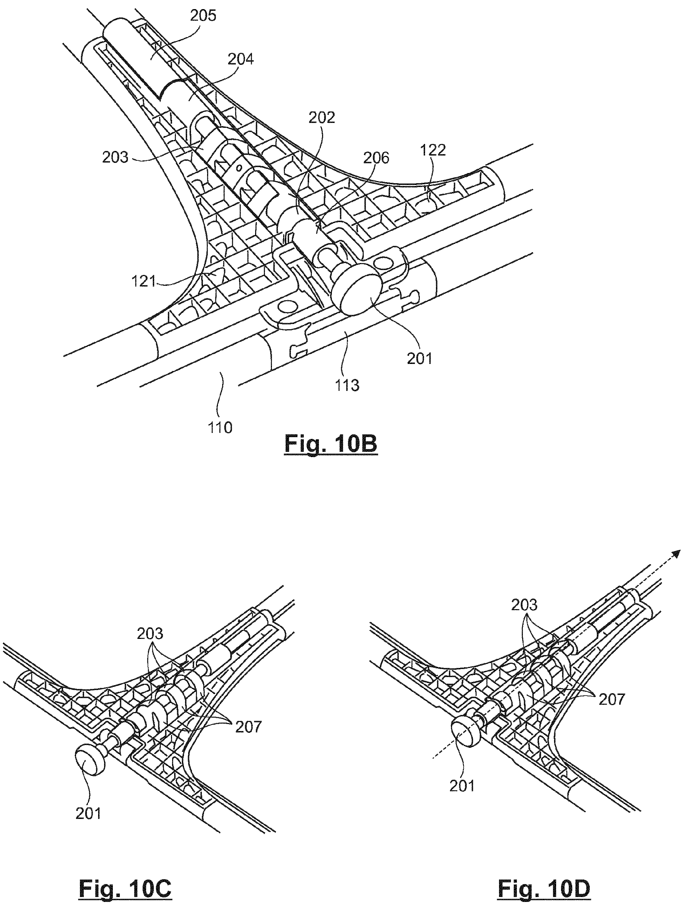

Dans un premier mode de réalisation illustré sur les **figures 10A** **et** **10B****,** ce système de blocage se présente sous la forme d'un verrou poussoir 20 monté au niveau de la charnière des cadres 121 et 122 du déflecteur 12. Sur la vue de dessous du déflecteur 12 (figure 10B), on distingue le poussoir 201 du verrou poussoir qui est muni d'un axe 202 sur lequel est monté un système de fourchette. Une unique dent 203 est mise en oeuvre dans cet exemple mais on pourra prévoir un nombre de dents plus important afin d'optimiser la tenue et le blocage du système, comme illustré par les figures 10C (position verrouillée) et 10D (position déverrouillée). L'axe est monté mobile en translation (selon l'axe 3") sur les cadres 121 et 122 du déflecteur 12 par le biais des pièces de support 205 et 206.

Un ressort 205 pousse en permanence l'axe 202 dans la position verrouillée illustrée sur les figures 10A et 10B. Dans cette position, la dent 203 de la fourchette est en contact avec une partie correspondante du cadre 121 afin d'empêcher toute rotation des cadres 121, 122 autour de l'axe de charnière 3".

Une pression sur le poussoir 201, et donc sur l'axe 202, permet de désengager la dent 203 (ou les dents 203, coopérant avec les butées 207, ou se dégageant de celle-ci pour permettre le pliage, respectivement dans le cas des figures 10C e 10D) de la fourchette de la butée du cadre 121 et de replier les cadres 121, 122 autour de l'axe 3" (et par conséquent le dispositif coupe-vent 1).

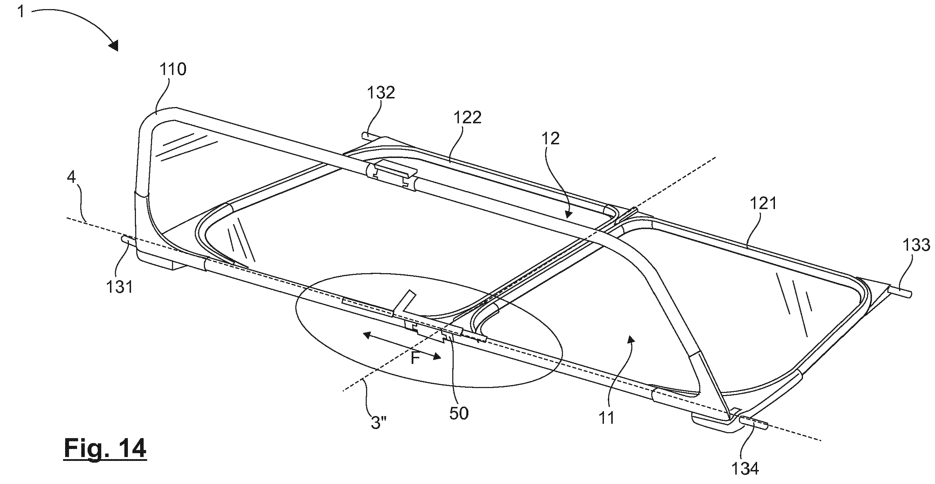

Dans une alternative illustrée sur la **figure 14****,** une targette 50 montée perpendiculaire à l'axe de charnière 3" est mise en oeuvre et permet lorsqu'elle est déplacée selon la flèche F de bloquer ou de libérer le repliage des cadres 121, 122 autour de l'axe de charnière 3".

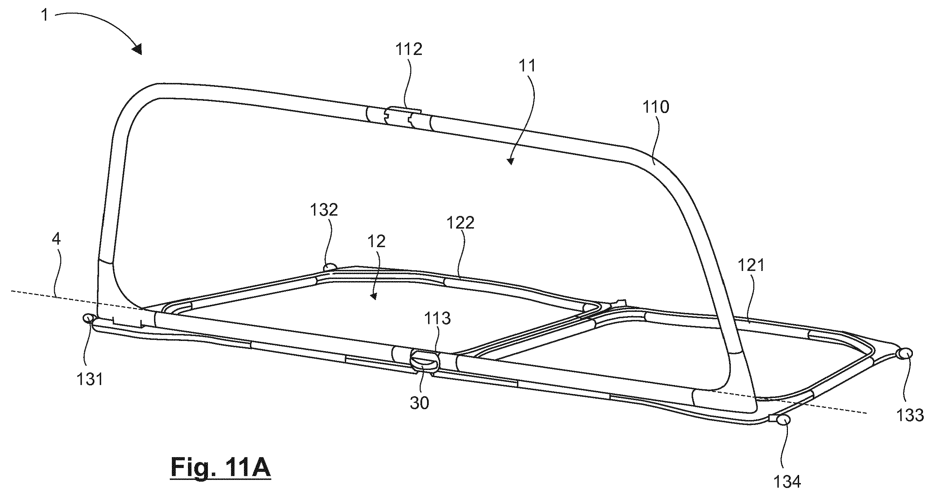

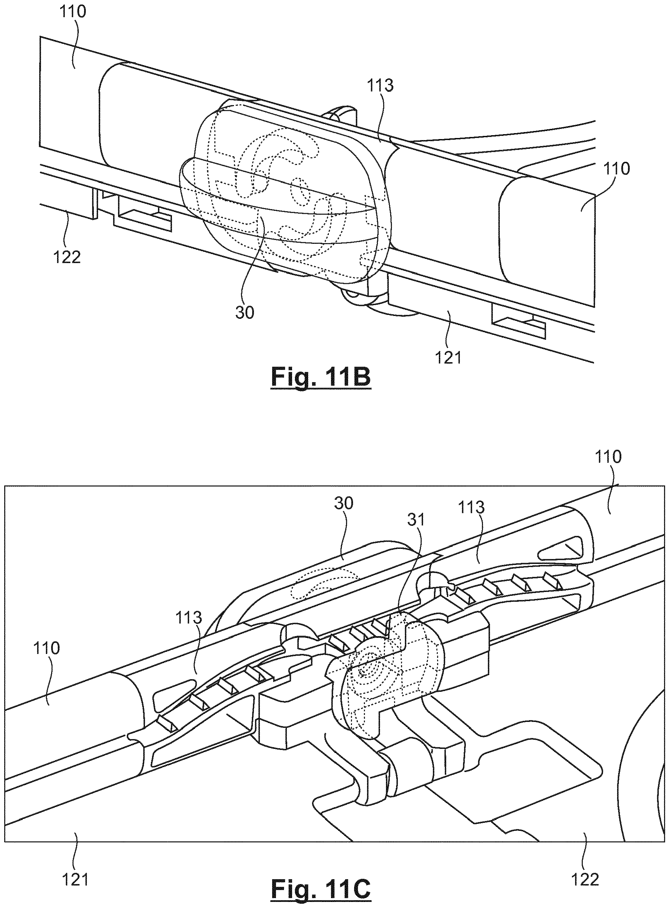

Dans une autre alternative illustrée sur les **figures 11A à 11C****,** une poignée 30, dite « quart de tour », permet de bloquer le repliage des cadres 121, 122 du déflecteur 12. Cette poignée est montée pivotante sur le cadre 110 du déflecteur 11 autour d'un axe sensiblement parallèle à l'axe de charnière 3". Cette poignée 30 agit sur un élément de blocage 31 qui coopère avec la triple charnière 113 du déflecteur 11.

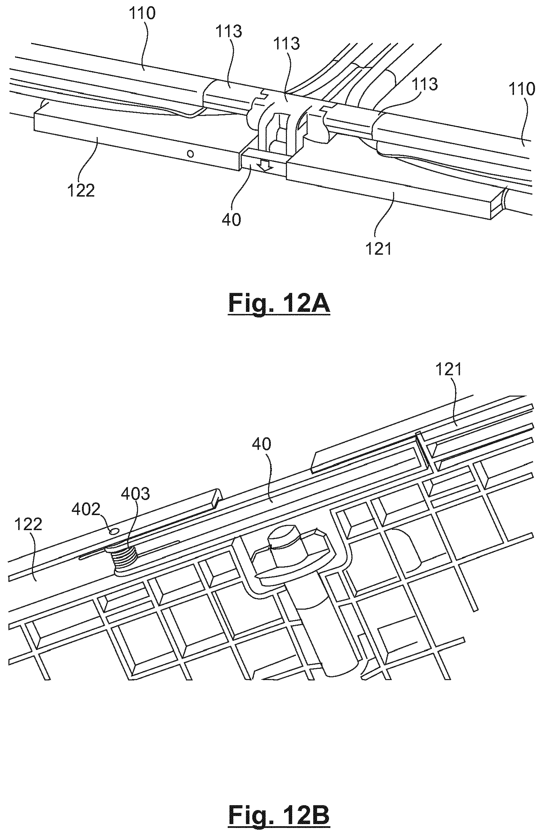

Dans une alternative illustrée sur les **figures 12A et 12B****,** une cale 40, sous contrainte sous l'effet d'un ressort 403 qui est solidarisé au cadre 122 par un axe 402, est bloquée contre une butée ménagée dans le cadre 121. Une pression sur la cale 40 permet de désengager cette dernière de la butée et permet la rotation des deux cadres 121, 122.

### Variantes et options

Les toiles utilisées pour les déflecteurs sont avantageusement choisies de façon à optimiser la protection contre les remous dus au vent. Elles peuvent être identiques ou différentes.

Elles sont avantageusement réalisées dans des matériaux résistants au feu, à l'usure et à la salissure. Leur coloris peut être harmonisé avec celui de la garniture intérieure du véhicule et/ou avec la peinture de ce dernier.

Par ailleurs, dans une variante, le déflecteur 11 peut être constitué de deux cadres articulés entre eux et le déflecteur 12 d'un seul cadre.

## Revendications

1. Dispositif coupe-vent pliable pour véhicule automobile de type cabriolet, comprenant un déflecteur horizontal (12), destiné à couvrir l'espace situé à l'arrière des sièges avant du véhicule, et/ou un déflecteur vertical (11) destiné à s'étendre sensiblement à l'arrière des dossiers des sièges avant ou des sièges arrière du véhicule,
des articulations permettant le passage d'une position pliée à une position dépliée, et réciproquement,
ledit dispositif portant au moins deux premiers éléments de solidarisation destinés à coopérer avec une partie complémentaire dudit véhicule,
**caractérisé en ce qu'**il comprend des moyens d'escamotage desdits premiers éléments de solidarisation pilotés par le pliage desdits déflecteurs (11, 12).

2. Dispositif coupe-vent selon la revendication 1, **caractérisé en ce que** le déflecteur horizontal (12) et/ou le déflecteur vertical (11) comporte chacun au moins un cadre (121, 122, 110) dans lequel peut être tendue au moins une toile formant paroi (1211, 1212, 1221, 1222).

3. Dispositif coupe-vent selon l'une quelconque des revendications 1 et 2, **caractérisé en ce qu'**il comprend un déflecteur vertical et un déflecteur horizontal, lesdites articulations permettant un pliage en deux temps :
- une première opération de pliage par rapport à un premier axe de pliage, dans laquelle ledit dispositif est plié en deux, ledit déflecteur vertical et ledit déflecteur horizontal s'étendant dans des plans sensiblement parallèles ;
- une deuxième opération de pliage par rapport à au moins un second axe de pliage perpendiculaire audit premier axe, dans laquelle ledit dispositif est plié en quatre.

4. Dispositif coupe-vent selon la revendication 3, caractérisé en ce lesdits éléments de solidarisation sont escamotés lors de la deuxième opération de pliage.

5. Dispositif coupe-vent selon l'une quelconque des revendications 3 et 4, **caractérisé en ce que** le déflecteur horizontal (12) comporte deux cadres mobiles l'un par rapport à l'autre.

6. Dispositif coupe-vent selon l'une quelconque des revendications 1 à 5, **caractérisé en ce que** le déflecteur vertical (11) comprend un cadre (110) en deux parties reliées par deux charnières doubles (112, 113).

7. Dispositif coupe-vent selon l'une quelconque des revendications 3 à 8, **caractérisé en ce que** lesdits premiers éléments de solidarisation comprennent au moins un premier pion (131, 132) s'étendant sensiblement parallèlement audit premier axe, dans la position dépliée.

8. Dispositif coupe-vent selon la revendication 7, **caractérisé en ce que** ledit premier pion (131, 132) est entraîné en coulissement parallèlement audit premier axe, dans un logement ménagé dans le déflecteur horizontal (12), lors de la deuxième opération de pliage, par une pièce solidaire du cadre (110) dudit déflecteur vertical (11).

9. Dispositif coupe-vent selon la revendication 8, **caractérisé en ce que** ledit pion (131, 132) présente une gorge recevant un élément d'entraînement en coulissement solidaire dudit cadre (110) du déflecteur vertical (11).

10. Dispositif coupe-vent selon l'une quelconque des revendications 1 à 9, **caractérisé en ce qu'**il comprend des seconds moyens de solidarisation (133, 134) escamotables, montés sur ledit déflecteur horizontal à distance desdits premiers moyens de solidarisation (131, 132).

11. Dispositif coupe-vent selon la revendication 10, **caractérisé en ce que** lesdits seconds moyens de solidarisation sont des seconds pions montés articulés entre une position de travail et une position escamotée.

12. Dispositif coupe-vent selon la revendication 11, **caractérisé en ce que** lesdits seconds pions coopèrent avec au moins une lame ressort, dans la position de travail et/ou dans la position escamotée.

13. Dispositif coupe-vent selon les revendications 10 à 12, **caractérisé en ce que** le déplacement desdits seconds pions est pilotés par le déplacement desdits premiers pions.

14. Dispositif coupe-vent selon la revendication 13, **caractérisé en ce qu'**au moins un premier pion et au moins un second pion sont reliés par un câble.

15. Dispositif coupe-vent selon l'une quelconque des revendications 1 à 14, **caractérisé en ce qu'**il comprend des moyens de verrouillage dans ladite position dépliée, et des moyens de libération du verrouillage, permettant de le replier.

## Patentansprüche

1. Faltbarer Windabweiser für Kraftfahrzeug des Typs Cabriolet, der einen horizontalen Abweiser (12) umfasst, der dazu bestimmt ist, den Raum abzudecken, der sich hinter Vordersitzen des Fahrzeugs befindet, und/oder einen vertikalen Abweiser (11), der dazu bestimmt ist, sich im Wesentlichen hinter Rückenlehnen der Vordersitze oder der Hintersitze des Fahrzeugs zu erstrecken,
wobei Gelenke den Übergang von einer gefalteten Position zu einer aufgefalteten Position und umgekehrt erlauben,
wobei die Vorrichtung mindestens zwei erste Elemente zur festen Verbindung trägt, die dazu bestimmt sind, mit einem komplementären Teil des Fahrzeugs zusammenzuwirken,
**dadurch gekennzeichnet, dass** er Mittel zum Einfahren der ersten Elemente zur festen Verbindung, die durch das Falten der Abweiser (11, 12) gesteuert sind, umfasst.

2. Windabweiser nach Anspruch 1, **dadurch gekennzeichnet, dass** der horizontale Abweiser (12) und/oder der vertikale Abweiser (11) jeweils mindestens einen Rahmen (121, 122, 110) umfassen, in dem mindestens ein Tuch, das eine Wand bildet (1211, 1212, 1221, 1222), gespannt werden kann.

3. Windabweiser nach einem der Ansprüche 1 und 2, **dadurch gekennzeichnet, dass** er einen vertikalen Abweiser und einen horizontalen Abweiser umfasst, wobei die Gelenke ein Falten in zwei Phasen erlauben:
- einen ersten Faltvorgang in Bezug auf eine erste Faltachse, bei der die Vorrichtung in zwei gefaltet wird, wobei sich der vertikale Abweiser und der horizontale Abweiser in im Wesentlichen parallelen Ebenen erstrecken,
- einen zweiten Faltvorgang in Bezug auf mindestens eine zweite Faltachse senkrecht zu der ersten Achse, wobei die Vorrichtung in vier gefaltet wird.

4. Windabweiser nach Anspruch 3, **dadurch gekennzeichnet, dass** die Elemente zum festen Verbinden bei dem zweiten Faltvorgang eingefahren werden.

5. Windabweiser nach einem der Ansprüche 3 und 4, **dadurch gekennzeichnet, dass** der horizontale Abweiser (12) zwei zueinander bewegliche Rahmen umfasst.

6. Windabweiser nach einem der Ansprüche 1 bis 5, **dadurch gekennzeichnet, dass** der vertikale Abweiser (11) einen Rahmen (110) aus zwei Teilen, die durch zwei doppelte Scharniere (112, 113) verbunden sind, umfasst.

7. Windabweiser nach einem der Ansprüche 3 bis 8, **dadurch gekennzeichnet, dass** die ersten Elemente zur festen Verbindung mindestens einen ersten Stift (131, 132) umfassen, der sich im Wesentlichen parallel zu der ersten Achse in der aufgefalteten Position erstreckt.

8. Windabweiser nach Anspruch 7, **dadurch gekennzeichnet, dass** der erste Stift (131, 132) parallel gleitend zu der ersten Achse in einer Aufnahme, die in dem horizontalen Abweiser (12) eingerichtet ist, bei dem zweiten Faltvorgang durch ein Teil, das fest mit dem Rahmen (110) des vertikalen Abweisers (11) verbunden ist, angetrieben ist.

9. Windabweiser nach Anspruch 8, **dadurch gekennzeichnet, dass** der Stift (131, 132) eine Nut aufweist, die ein Element zum Antreiben unter Gleiten, das fest mit dem Rahmen (110) des vertikalen Abweisers (11) verbunden ist, aufnimmt.

10. Windabweiser nach einem der Ansprüche 1 bis 9, **dadurch gekennzeichnet, dass** er zweite einfahrbare Mittel zur festen Verbindung (133, 134) umfasst, die auf dem horizontalen Abweiser in Entfernung von den ersten Mitteln zur festen Verbindung (131, 132) installiert sind.

11. Windabweiser nach Anspruch 10, **dadurch gekennzeichnet, dass** die zweiten Mittel zur festen Verbindung zweite Stifte sind, die gelenkig zwischen einer Arbeitsposition und einer eingefahrenen Position installiert sind.

12. Windabweiser nach Anspruch 11, **dadurch gekennzeichnet, dass** die zweiten Stifte mit mindestens einem Federblatt in der Arbeitsposition und/oder in der eingefahrenen Position zusammenwirken.

13. Windabweiser nach einem der Ansprüche 10 bis 12, **dadurch gekennzeichnet, dass** die Bewegung der zweiten Stifte durch die Bewegung der ersten Stifte gesteuert ist.

14. Windabweiser nach Anspruch 13, **dadurch gekennzeichnet, dass** mindestens ein erster Stift und mindestens ein zweiter Stift durch ein Kabel verbunden sind.

15. Windabweiser nach einem der Ansprüche 1 bis 14, **dadurch gekennzeichnet, dass** er Mittel zum Verriegeln in der aufgefalteten Position und Mittel zum Freigeben der Verriegelung, die es erlauben, ihn zusammenzufalten, umfasst.

## Claims

1. Foldable wind-deflecting device for a motor vehicle of the convertible type, said device comprising a horizontal deflector (12) which is intended to cover the space situated behind the front seats of the vehicle, and/or a vertical deflector (11) which is intended to extend substantially behind the backs of the front seats or rear seats of the vehicle,
joints which make it possible the transition from a folded position to an unfolded position and *vice versa,*
said device carrying at least two first fastening elements which are intended to cooperate with a complementary part belonging to said vehicle, **characterised in that** said device comprises means for retracting said first fastening elements, which are controlled by folding said deflectors (11, 12).

2. Wind-deflecting device according to Claim 1, **characterised in that** the horizontal deflector (12) and/or the vertical deflector (11) each comprise at least one frame (121, 122, 110) within which at least one canvas forming a partition (1211, 1212, 1221, 1222) may be stretched.

3. Wind-deflecting device according to either of Claims 1 or 2, **characterised in that** it comprises a vertical deflector and a horizontal deflector, said joints permitting folding in two stages:
- a first operation involving folding in relation to a first folding axis , wherein said device is folded in two, said vertical deflector and said horizontal deflector extending within substantially parallel planes;
- a second operation involving folding in relation to at least one second folding axis perpendicular to said first axis, wherein said device is folded in four.

4. Wind-deflecting device according to Claim 3, **characterised in that** said fastening elements are retracted when the second folding operation occurs.

5. Wind-deflecting device according to either of Claims 3 or 4, **characterised in that** the horizontal deflector (12) comprises two frames which are movable in relation to one another.

6. Wind-deflecting device according to any one of Claims 1 to 5, **characterised in that** the vertical deflector (11) comprises a frame (110) divided in two parts which are connected by two double hinges (112, 113).

7. Wind-deflecting device according to any one of Claims 3 to 8, **characterised in that** said first fastening elements comprise at least one first pin (131, 132) which substantially extends parallel to said first axis, in the unfolded position.

8. Wind-deflecting device according to Claim 7, **characterised in that** said first pin (131, 132) is driven in sliding motion, parallel to said first axis, into a housing arranged in the horizontal deflector (12), when the second folding operation occurs, by a piece which is integral with the frame (110) of said vertical deflector (11).

9. Wind-deflecting device according to Claim 8, **characterised in that** said pin (131, 132) has a channel which receives an element, made integral with said frame (110), for driving in sliding motion the vertical deflector (11)..

10. Wind-deflecting device according to any one of Claims 1 to 9, **characterised in that** it comprises second retractable fastening means (133, 134) which are mounted on said horizontal deflector at a distance from said first fastening means (131, 132).

11. Wind-deflecting device according to Claim 10, **characterised in that** said second fastening means are second pins which are mounted so as to be articulated between a working position and a retracted position.

12. Wind-deflecting device according to Claim 11, **characterised in that** said second pins cooperate with at least one spring blade in the working position and/or in the retracted position.

13. Wind-deflecting device according to Claims 10 to 12, **characterised in that** the displacement of said second pins is controlled by the displacement of said first pins.

14. Wind-deflecting device according to Claim 13, **characterised in that** at least one first pin and at least one second pin are connected by a cable.

15. Wind-deflecting device according to any one of Claims 1 to 14, **characterised in that** it comprises means for locking in said unfolded position, and means for releasing the locking action which make it possible to fold up said device.
